# EUROPÄISCHE PATENTSCHRIFT

(11) **EP 3 440 291 B1**
(45) Veröffentlichungstag und Bekanntmachung des Hinweises auf die Patenterteilung: **06.07.2022**
(21) Anmeldenummer: 17705293.3
(22) Anmeldetag: 24.01.2017
(51) Int. Cl.: E05B 17/10, E05B 17/22, B60Q 1/26, E05B 81/54

(54) **KRAFTFAHRZEUGSCHLOSS**
MOTOR VEHICLE LOCK
SERRURE DE VÉHICULE AUTOMOBILE

(30) Priorität: 26.02.2016 DE 102016103423
(43) Veröffentlichungstag der Anmeldung: 13.02.2019
(73) Patentinhaber: Kiekert AG, 42579 Heiligenhaus (DE)
(72) Erfinder: BENDEL, Thorsten, 46149 Oberhausen (DE); POHLE, Werner, 44329 Dortmund (DE); NOTTEBAUM, Thorsten, 64367 Mühltal (DE)
(86) Internationale Anmeldenummer: PCT/DE2017/100039
(87) Internationale Veröffentlichungsnummer: WO 2017/144043

(56) Entgegenhaltungen:
- EP-A1- 3 408 476
- WO-A1-2004/113654
- WO-A1-2014/183741
- WO-A1-2017/129159
- DE-A1- 19 528 093
- DE-A1-102010 050 183
- DE-A1-102014 003 505
- US-B1- 9 127 477

## Beschreibung

Die Erfindung betrifft ein Kraftfahrzeugschloss aufweisend ein Gehäuse, eine elektrische Stromversorgung, mindestens ein Leuchtmittel, wobei das Leuchtmittel an die elektrische Stromversorgung anbindbar ist, und wobei das Leuchtmittel Licht in ein Lichtleitelement emittiert.

Kraftfahrzeuge, die im Straßenverkehr eingesetzt sind, unterliegen einer Reihe von Sicherheitsvorschriften. Insbesondere die Beleuchtung eines Kraftfahrzeugs ist in den vergangenen Jahren mehr und mehr in den Vordergrund gerückt. So gibt es heute bereits Fahrzeuge, die über ein Fahrlicht verfügen, das unabhängig von Abblendlicht und Fernlicht, mit dem in der Dunkelheit gefahren wird, auch bei Tag das Fahrzeug illuminieren und somit das Fahrzeug für die Verkehrsteilnehmer besser sichtbar gestalten. Das Licht am Kraftfahrzeug ist somit ein sicherheitsrelevantes Mittel.

Zur weiteren Erhöhung der Sicherheit für den Fahrzeugführer wie auch weiterer Verkehrsteilnehmer ist es darüber hinaus bekannt, eine sich öffnende Tür und/oder Klappe eines Kraftfahrzeugs mit einem Leuchtmittel, Reflektoren oder lumineszierenden Bestandteilen auszuführen, so dass den weiteren Verkehrsteilnehmern mittels eines Lichteffekts die Bewegungen am Kraftfahrzeug anzeigbar sind.

So ist beispielsweise aus der JP 2002-264651 A1 eine Kraftfahrzeugschließeinrichtung bekannt geworden, bei der die am Schließsystem angeordnete Drehfalle mit einer lumineszierenden Oberfläche versehen ist, so dass in der Dunkelheit und/oder bei schlechter Sicht ein Lichteffekt erzeugt wird, der die Sicherheit am Kraftfahrzeug erhöht. Beispielhaft ist in der Druckschrift ein Kraftfahrzeugschloss für eine Seitentür dargestellt, indem die Drehfalle des Kraftfahrzeugschlosses im geöffneten Zustand durch ein Einlaufmaul des Kraftfahrzeugschlosses hindurch sichtbar bleibt, auch wenn die Drehfalle bzw. das Gesperre des Kraftfahrzeugschlosses sich im geöffneten, das heißt entsperrten Zustand befindet.

Aus der DE 39 08 095 A1 sind ebenfalls Rückleuchten und Reflektoren bekannt geworden, die auf ein Öffnen der Tür hinweisen bzw. während des Öffnens der Tür entweder ein auf die Tür fallendes Licht reflektieren oder selbst als Leuchtmittel anzeigen, dass die Tür geöffnet ist. Offenbart ist ein Türeinrichtungselement, das mit verschiedenen Lichtern, wie beispielsweise einer Leseleuchte, einer Rückleuchte und einer Bodenleuchte ausgestattet ist. Darüber hinaus kann das Türeinrichtungselement Reflektoren umfassen. Dabei kann auch eine Rückleuchte in einen Rand des Einlaufschlitzes integriert sein, wobei der Einlaufschlitz gleichmäßig erweitert wurde. All diese Maßnahmen dienen dazu, die Verkehrsteilnehmer auf eine geöffnete oder sich öffnende Tür hinzuweisen und somit die Sicherheit des Verkehrs zu gewährleisten.

Aus der DE 20 2008 005 174 U1 ist eine Kraftfahrzeugschlossanordnung für eine Kraftfahrzeugtür bekannt geworden, bei der das Kraftfahrzeugschloss mit einer Leuchtanordnung ausgebildet ist, wobei die Leuchtanordnung eine elektrische Lichtquelle aufweist, deren Lichtstrahlen über ein Leuchtelement abgebbar ist. In einer Ausführungsform kann die Lichtquelle so in das Schlossgehäuse eingelassen sein, dass nur die lichtabstrahlende Oberfläche der Lichtquelle aus dem Schlossgehäuse nach außen weist. Bevorzugt offenbart die DE 20 2008 005 174 U1 aber eine Lichtquelle, die mit einem Lichtleiter zusammenwirkt, die das Licht der Lichtquelle an ein Leuchtelement weiterleitet, wobei das Leuchtelement eine Optik zur Abgabe der Lichtstrahlung umfasst.

Aus der DE 195 28 093 A1 ist eine Diebstahlschutzvorrichtung für ein Kraftfahrzeug bekannt, bei der das Kraftfahrzeugschloss mit einem Leuchtmittel ausgebildet ist, wobei das Leuchtmittel einen Lichtleiter aufweist und wobei der Lichtleiter derart ausgestaltet ist, dass er Licht zum Schlüsselloch hin führt.

Aus der WO 2004/113654 A1 ist ein Kraftfahrzeugschloss mit einem Leuchtmittel bekannt, wobei das Leuchtmittel unmittelbar im Einlaufmaul des Kraftfahrzeugschlosses angeordnet ist, und dass durch ein Schaltelement ein Signal erzeugbar ist, wenn eine geöffnet wird, sodass das Leuchtmittel mit Spannung versorgt wird.

Aus der DE 10 2010 050183 A1 ist eine Kraftfahrzeugtür mit einem Türgriff mit einer Leuchtvorrichtung bekannt, die die Beleuchtung der Kraftfahrzeugtür ermöglicht.

Im Bereich der Griffmulde ist die Leuchtvorrichtung angeordnet, die einen von einer Lichtquelle gespeisten Lichtleiter aufweist.

Die aus dem Stand der Technik bekannten Anzeigemittel bzw. Leuchtmittel weisen dabei den Nachteil auf, dass sie entweder keine ausreichende Lichtintensität bereitstellen oder den Spannungsschwankungen im Kraftfahrzeug folgen, so dass nicht gewährleistet werden kann, dass mittels des Leuchtmittels ein zuverlässig arbeitendes Sicherheitsmerkmal am Kraftfahrzeug realisierbar ist. Aufgabe der Erfindung ist es, eine verbesserte Kraftfahrzeugeinrichtung bereitzustellen, die die Nachteile des Standes der Technik überwindet. Darüber hinaus ist es Aufgabe der Erfindung, eine gleichmäßige mit hoher Dichtintensität ausgebildete Sicherheitseinrichtung bzw. Leuchtmittelvorrichtung am Kraftfahrzeug bereitzustellen. Darüber hinaus ist es ebenfalls Aufgabe der Erfindung, ein kostengünstiges und konstruktiv einfaches Sicherungssystem für eine Kraftfahrzeugschließeinrichtung bereitzustellen.

Die Lösung der Aufgabe erfolgt erfindungsgemäß durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen beschriebenen Merkmale möglich.

Gemäß dem Patentanspruch 1 wird die Aufgabe der Erfindung dadurch gelöst, dass ein Kraftfahrzeugschloss bereitgestellt wird, aufweisend ein Schlossgehäuse, eine elektrische Stromversorgung, mindestens ein Leuchtmittel, wobei das Leuchtmittel an die elektrische Stromversorgung anbindbar ist und wobei das Leuchtmittel Licht in ein Lichtleitelement emittiert und das Leuchtmittel unmittelbar auf einer im inneren des Schlossgehäuses angeordneten Platine anordbar ist. Durch die erfindungsgemäße Ausbildung eines Kraftfahrzeugschlosses, mit einer im Inneren des Schlossgehäuses angeordneten Platine, auf der gleichzeitig das Leuchtmittel angeordnet ist, ist nun die Möglichkeit geschaffen, ein Leuchtmittel bereitzustellen, das stets mit gleicher Lichtintensität das Lichtleitelement ausleuchtet und somit für ein zuverlässiges Erzielen eines Sicherheitsmerkmals im Kraftfahrzeug verwendet werden kann. Insbesondere die Anordnung der Platine ermöglicht es hierbei, das Leuchtmittel in optimaler Weise mit einer Spannung zu versorgen, so dass das Leuchtmittel nahezu unabhängig von einer Spannungsschwankung im Kraftfahrzeug arbeiten kann. Eine Spannungsschwankung kann dabei zum Beispiel dadurch auftreten, dass das Kraftfahrzeug gestartet wird und/oder eine Beleuchtung des Kraftfahrzeugs eingeschaltet wird. In diesen Fällen schwankt die Spannung im Bordnetz des Kraftfahrzeugs, was wiederum zu Spannungsschwankungen in den Leuchtmitteln führt, die dadurch eine Lichtintensität einbüßen. Durch die Einbindung einer Platine in das Schloss besteht nun die Möglichkeit, das Leuchtmittel unabhängig oder nahezu unabhängig von der Bordnetzspannung zu betreiben, so dass stets gleichbleibende Spannungen zur Verfügung stehen, um das Leuchtmittel kontinuierlich und gleichbleibend mit Spannung zu versorgen.

Als Kraftfahrzeugschlösser sind hier bevorzugt Kraftfahrzeugseitentürschlösser anzusehen. Kraftfahrzeugschlösser kommen nicht nur bei Türen, Klappen, Hauben und/oder Schiebetüren zum Einsatz, sondern können auch zum Beispiel im Bereich von Abdeckungen, wie sie beispielsweise für Cabriodächer verwendet werden, eingesetzt werden. Neben der Warnfunktion, die bevorzugt bei Türen oder Klappen im Vordergrund steht, kann die erfindungsgemäße Beleuchtungseinrichtung auch zum Beispiel bei Klappen dazu dienen, anzuzeigen, ob die Klappe vollumfänglich und richtig geschlossen wurde. So kann die Schließeinrichtung zum Beispiel einen Mikroschalter umfassen, der erst geschaltet wird, wenn die Schließeinrichtung in ihre endgültige verschlossene Position gelangt ist. Darüber hinaus kann ein Beleuchten der Klappe, Schlösser, Schiebetüren und/oder Hauben auch dazu dienen, weitere Funktionselemente, wie beispielsweise einen Schalter oder ein Sicherungselement zu beleuchten, und somit für den Bediener bei eingeschränkter Sicht sichtbar zu machen. In Bezug auf ein Schaltmittel, wie beispielsweise einen Mikroschalter, ist es bei Kraftfahrzeugschlössern und insbesondere Türschlössern eine Hauptrastposition des Gesperres, in der eine Drehfalle mittels zum Beispiel einer Sperrklinke verrastet ist, in der ein Mikroschalter zur Ansteuerung des Leuchtmittels abfragbar ist.

Das Kraftfahrzeugschloss weist weiterhin ein Schlossgehäuse auf, das bevorzugt aus Kunststoff gefertigt ist. Ein Schlossgehäuse besteht bevorzugt aus zwei Teilen, einem Gehäuseboden und einem Gehäusedeckel, die miteinander zumeist und zumindest bereichsweise wasserdicht verbindbar sind. Das Schlossgehäuse ist dabei derart ausgebildet, dass ein Öffnungsbereich des Schlosses, der mit einem zum Beispiel Schlosshalter zusammenwirkt, umfänglich umschlossen ausgeführt ist. Dieser Öffnungsbereich wird auch Öffnungsmaul genannt. Zur Stabilisierung des Schlosses und insbesondere zur Stabilisierung Lagerung eines im Schloss befindlichen Gesperres umschließt das Schlossgehäuse eine Schlossplatte. Die Schlossplatte kann das Schlossgehäuse zumindest bereichsweise umschließen, wobei je nach Ausführungsform die Schlossplatte auch das Öffnungsmaul umschließen kann.

Das Kraftfahrzeugschloss weist ferner eine Stromversorgung auf, wobei der elektrische Strom zumeist mittels eines Steckers in das Schloss eingeleitet wird und wobei der Strom über Leiterbahnen und/oder ein Stanzgitter verteilbar ist. Bevorzugt ist das Leuchtmittel unmittelbar auf einer Leiterbahn angeordnet. Besonders bevorzugt wird als Leuchtmittel dabei eine LED eingesetzt, die unmittelbar auf der Leiterplatine angeordnet ist. Die unmittelbare Anordnung auf einer Platine bietet dabei den Vorteil, dass eine Ansteuerung erleichtert wird.

Die Verwendung eines Lichtleitelements ist dahingehend vorteilhaft, weil dadurch die Möglichkeit geschaffen wird, das Leuchtmittel beliebig im Kraftfahrzeugschloss und insbesondere unmittelbar auf der Platine anzuordnen. Mittels des Lichtleitelements ist dann die Möglichkeit geschaffen, das vom Leuchtmittel emittierte Licht an eine beliebige Oberfläche des Kraftfahrzeugschlosses bzw. der Schließeinrichtung weiterzuleiten.

Mittels der elektrischen Stromversorgung ist das mindestens eine Leuchtmittel mit einer Spannung versorgbar. In Kombination aus einer elektrischen Stromversorgung mit einer separaten Anordnung einer Platine im Inneren des Kraftfahrzeugschlosses besteht nun die Möglichkeit, einerseits eine vorhandene Stromversorgung im Kraftfahrzeugschloss zur Ansteuerung des Leuchtmittels zu verwenden, was wiederum einen konstruktiven wie auch eine kostengünstige Lösung zur Spannungsversorgung des Leuchtmittels bietet. Darüber hinaus ist mit dem Lichtleitelement die Möglichkeit geschaffen, das Leuchtmittel in einem Bereich im Schloss anzuordnen, der beabstandet zur eigentlichen Lichtaustrittsöffnung im Kraftfahrzeug angeordnet ist. Mittels der Platine ist somit auf die Spannungsschwankungen einwirkbar, eine kostengünstige und konstruktiv einfache Anordnung der Stromversorgung für das Leuchtmittel ausbildbar und mittels des Lichtleitelementes kann das Licht umgelenkt und zielgerichtet an eine Lichtaustrittsöffnung geleitet werden.

In einer Ausführungsform der Erfindung ist die Platine auf einem Elektrokomponententräger des Kraftfahrzeugschlosses angeordnet. Ein Elektrokomponententräger ist Teil der elektrischen Stromversorgung und kann als separates Bauteil in das Schlossgehäuse eingefügt sein oder in zumindest ein Teil des Schlossgehäuses integriert sein. Ein Elektrokomponententräger ist beispielsweise in einem Stanzgitter gebildet, das mit einem Kunststoff umspritzt ist, wobei Teile des Stanzgitters aus dem Kunststoff herausragen und Kontaktfahnen für elektrische Komponenten bilden. Gleichzeitig kann der Elektrokomponententräger einen Stecker umfassen, mit dem das Kraftfahrzeugschloss am Kraftfahrzeug anschließbar bzw. adaptierbar ist. In vorteilhafter Weise ist die Platine unmittelbar auf dem Elektrokomponententräger angeschlossen, das heißt das Stanzgitter und/oder Leiterbahnen des Elektrokomponententrägers mit der Platine kontaktiert sind. Werden in Bezug auf den Elektrokomponententräger Leiterbahnen und/oder ein Stanzgitter genannt, so sind dies lediglich beispielhafte Ausführungsformen für Leitungen, mit denen Steuersignale oder Versorgungsspannungen in das Schloss hinein oder aus dem Schloss heraus geleitet werden können. Beispielhaft können auch zumindest bereichsweise separate elektrische Leitungen in Form von Kabeln Umfang des Elektrokomponententrägers sein.

Erfindungsgemäß weist die Platine Mittel zur Steuerung, insbesondere eine Steuerelektronik, für das Leuchtmittel auf. Das Bordnetz des Kraftfahrzeugs kann Spannungsschwankungen aufweisen, die zum Beispiel darin begründet sind, dass hohe Lasten durch Verbraucher zur Verfügung gestellt werden müssen. Zu diesem Zeitpunkt, wenn beispielsweise das Kraftfahrzeug gestartet wird, ein Cabriodach geschlossen oder geöffnet oder wenn beispielsweise viele Verbraucher gleichzeitig eingeschaltet werden, so kann es zu Spannungsschwankungen in den Versorgungsleitungen im Kraftfahrzeugschloss kommen. Zum Ausgleich von Spannungsschwankungen, zur Steuerung der Lichtintensität und/oder zum Beispiel für einen Farbwechsel können elektrische Bauteile, wie Widerstände, Kapazitäten, Schaltmittel, Mikroprozessoren, und vergleichbare elektronische Bauteile auf der Platine angeordnet sein. Je nach Umfang der Ansteuerung des Leuchtmittels kann dem Leuchtmittel somit eine gleichbleibende Spannung zugeleitet werden, was wiederum eine gleichmäßige Lichtintensität im Leuchtmittel bewirkt. Es ist somit erfindungsgemäß möglich, das Leuchtmittel gleichmäßig und mit einem stets gleichen Strom bzw. einem gewünschten Sollwert an Strom zu versorgen, um eine individualisierbare Lichtintensität im Kraftfahrzeugschloss bereitzustellen.

In einer weiteren Ausführungsform der Erfindung ist das Lichtleitelement unmittelbar mit dem Leuchtmittel verbunden. Das unmittelbare Anbinden des Lichtleitelementes an das Leuchtmittel ermöglicht es hierbei, eine hohe Lichtintensität in das Lichtleitelement einzuleiten. Somit kann mit einer geringstmöglichen Verluststrahlung gerechnet werden, bzw. es geht ein Minimum an emittiertem Licht aus dem Leuchtmittel verloren. Im Idealfall wird das gesamte emittierte Licht des Leuchtmittels in das Lichtleitelement hinein emittiert bzw. eingeleitet. Eine unmittelbare Anbindung heißt hierbei, dass das Lichtleitelement mit dem Leuchtmittel in Kontakt ist.

Ist ein Lichtleitkegel zwischen dem Lichtleitelement und dem Leuchtmittel angeordnet, so ergibt sich eine weitere vorteilhafte Ausgestaltung der Erfindung. Ein Lichtleitkegel bewirkt hierbei, dass das Licht in optimaler Weise in das Lichtleitelement einleitbar ist. Ist das Lichtleitelement beispielsweise zylindrisch ausgebildet, so kann der Lichtleitkegel ebenfalls eine konische zylindrische Form aufweisen. Der Lichtleitkegel kann aber auch, beispielsweise im Falle eines rechteckförmigen oder quadratischen Lichtleitelements eine konische und quadratisehe oder rechteckförmige konische Form aufweisen. Hierbei kann der Lichtleitkegel derart ausgeformt sein, dass er ausgehend von beispielsweise einer kreisförmigen Anlagefläche am Leuchtmittel sich kegelförmig erstreckend mit dem Lichtleitelement verbinden lässt. Dabei kann der Lichtleitkegel einstückig oder mehrteilig mit dem Lichtleitelement ausgebildet sein. In bevorzugter Ausführungsform weist der Endbereich, das heißt der Bereich, der vom Leuchtmittel beabstandet ist, eine dem Lichtleitelement entsprechende geometrische Form auf. In einer Ausführungsform ergibt sich dann ein Vorteil, wenn das Lichtleitelement aus einem Kunststoff, bevorzugt einem Polycarbonat oder Polymethylmethacrylat, gebildet ist. Polycarbonat (PC) oder Polymethylmethacrylat (PMMA) sind synthetische, transparente, thermoplastische Kunststoffe, mit einer vorteilhaften Lichtleiteigenschaft. Insbesondere in Kombination zum Beispiel mit reflektierenden Oberflächen, lichtstreuenden Elementen und einer geeigneten Oberflächenform kann in erfindungsgemäßer Weise eine hohe Lichtintensität mittels des Lichtleitelements transportiert werden, so dass ein Lichttransport ausgehend vom Leuchtmittel zur Lichtaustrittsfläche am Lichtleitelement der Lichttransport signifikant gesteigert werden kann. Darüber hinaus bietet Kunststoff und insbesondere ein thermoplastischer Kunststoff den Vorteil, dass beliebige Formen erzielt werden können, so dass ein leichter Einbau oder ein Verlegen des Lichtleitelements im Kraftfahrzeugschloss ermöglicht wird.

Erfindungsgemäß endet das Lichtleitelement mit einem dem Leuchtmittel entgegengesetzten Ende in einem Bereich, der es ermöglicht, dass Licht im eingebauten Zustand des Kraftfahrzeugschlosses in ein Umfeld des Kraftfahrzeugs emittierbar ist. Das unmittelbare Herausleuchten aus dem Kraftfahrzeugschloss ermöglicht es erfindungsgemäß, dass gezielte Bereiche im, am oder im Umfeld des Kraftfahrzeugs ausleuchtbar sind. Dabei können gezielte Bereiche, wie beispielsweise ein Sicherungselement, eine Notbetätigung, oder beispielsweise ein Einstiegsbereich oder ein im Klappenbereich angeordneter Verschlusshebel oder ein Schaltmittel angeleuchtet oder ausgeleuchtet werden. Ausleuchtbar ist zum Beispiel eine Kindersicherung, oder ein Betätigungshebel für eine zusätzliche Klappe oder zum Beispiel ein Schalter zur Betätigung einer Anhängerkupplung. Mittels des Austretens des Lichts aus dem Kraftfahrzeugschloss kann somit die Sicherheit und/oder die Funktionalität des Kraftfahrzeuges gesteigert werden. Mit Umfeld ist somit nicht nur der Bereich umfasst, der die weiteren Verkehrsteilnehmer betrifft und diese auf zum Beispiel eine sich öffnende Tür hinweist, sondern auch der Umfeldbereich, der sich um das Schloss herum erstreckt und beispielsweise weitere Funktionen, wie beispielsweise einen Schiebetürschalter ausleuchtet.

Endet das Lichtleitelement im Einlaufmaul des Kraftfahrzeugschlosses, so ergibt sich eine bevorzugte Ausführungsform der Erfindung. In vorteilhafter Weise kann sich das Lichtleitelement in das Einlaufmaul des Kraftfahrzeugschlosses hineinerstrecken und dort eine Lichtaustrittsfläche bilden. Das Einlaufmaul des Kraftfahrzeugschlosses befindet sich bei zum Beispiel einer Seitentür in einem Bereich, der für weitere Verkehrsteilnehmer sichtbar ist. Insbesondere bei eingeschränkter Sicht kann somit zum Beispiel sehr leicht und sicher auf das Öffnen der Tür hingewiesen werden. Bei einem Heckklappenschloss ist das Einlaufmaul zum Beispiel in Richtung des Kofferraums ausgerichtet, so dass ein Ausleuchten des Kofferraums und/oder des Heckbereichs des Kraftfahrzeugs ermöglicht wird. Somit kann zum Beispiel ein zusätzlicher Schalter für zum Beispiel eine Anhängerkupplung oder ein Ausladen des Kraftfahrzeugs erleichtert werden.

Darüber hinaus kann auch eine Person, die sich hinter dem Kraftfahrzeug befindet, beleuchtet werden, so dass sie für weitere Verkehrsteilnehmer gut sichtbar ist oder es wird ein Handhaben im hinteren Bereich des Kraftfahrzeugs erleichtert. Ist die Lichtaustrittsöffnung im Einlaufmaul einer Schiebetür angeordnet, so kann hierdurch zum Beispiel ein Aussteigen erleichtert werden und/oder ein Schiebetürschalter angeleuchtet sein. Im Falle einer Einbindung in ein Schloss für eine Klappe oder Abdeckung kann durch das Leuchtmittel im Einlaufmaul zum Beispiel ein Sicherungselement hervorgehoben werden, das durch einen Bediener zum Beispiel manuell betätigbar ist. Wie aufgezeigt, sind eine Vielzahl von Vorteilen durch die Anordnung des Endbereichs des Lichtleitelements im Einlaufmaul erzielbar.

Ist die Platine im Wesentlichen parallel zu einer Oberfläche eines das Schlossgehäuse zumindest bereichsweise umschließenden Schlossplatte angeordnet, so ergibt sich eine weitere vorteilhafte Ausgestaltungsform der Erfindung. Eine Anordnung der Platine und/oder des Leuchtmittels in der Nähe einer Schlossplatte und eine entsprechende nahezu parallele Anordnung bietet den Vorteil einer hohen Sicherheit für die Funktion des Leuchtmittels. Insbesondere die hohe Stabilität einer Schlossplatte, die zumeist aus einem 3-5 mm dicken Stahlblech geformt ist, ermöglicht es, selbst bei höchster Belastung, wie sie beispielsweise bei Unfällen auftritt, das Leuchtmittel zu schützen. Es steht somit stets ein Leuchtmittel zur Verfügung, das insbesondere in einem Falle einer Beschädigung der Tür eine Funktion behält und somit die Sicherheit des Kraftfahrzeugs erhöhen kann.

Weist das Lichtleitelement einen opaken und/oder lichtreflektierenden Mantel auf, so ergibt sich eine weitere vorteilhafte Ausgestaltungsform der Erfindung. Ein opaker oder ein lichtreflektierender Mantel bzw. eine Ummantelung des Lichtleitelements ermöglicht es hierbei, dass Streustrahlungen aus dem Lichtleitelement nicht austreten können, sondern in Richtung einer Austrittsfläche des Lichtleitelements gelenkt werden. Dies erhöht die Lichtintensität und ermöglicht es, eine maximale Lichtintensität vom Leuchtmittel in Richtung der Lichtaustrittsfläche zu transportieren bzw. zu leiten. Vorstellbar ist auch eine erste lichtreflektierende Schicht auf dem Lichtleitelement und eine weitere opake Schicht, so dass sich die Eigenschaften in vorteilhafter Weise für die Erfindung addieren.

In einer Ausführungsform der Erfindung ist das Lichtleitelement im Schlossgehäuse geführt und/oder fixiert. Das Lichtleitelement kann als separates Bauteil bevorzugt einstückig aber auch mehrteilig ausgebildet sein. Eine Führung des Lichtleitelements durch das Schlossgehäuse ermöglicht es hierbei, das Lichtleitelement sicher im Kraftfahrzeugschloss zu fixieren und eine zielgerichtete Auslenkung und Emission des Lichtes zielgerichtet zu bewirken. Durch die Ausbildung des Schlossgehäuses als Haltemittel kann auf zusätzliche konstruktive Maßnahme zur Fixierung des Lichtleitelements im Kraftfahrzeug verzichtet werden.

Nachfolgend wird die Erfindung unter Bezugnahme auf die anliegenden Zeichnungen anhand von Ausführungsbeispielen näher erläutert. Es gilt jedoch der Grundsatz, dass die Ausführungsbeispiele die Erfindung nicht beschränken, sondern lediglich vorteilhafte Ausgestaltungsformen darstellen.

Es zeigt:
- Figur 1: eine dreidimensionale Ansicht auf ein nur bereichsweise dargestelltes Kraftfahrzeugschloss, mit einem Teil eines Schlossgehäuses, einem Elektrokomponententräger mit einer Platine und einem Leuchtmittel, sowie einem daran angeschlossenen Lichtleitelement und eine Schlossplatte in einer dreidimensionalen Ansicht,
- Figur 2: eine Detailansicht gemäß dem Pfeil II aus der Figur 1 im Bereich des Einlaufmauls und die Anordnung der Platine auf dem Elektrokomponententräger im Kraftfahrzeugschloss, und
- Figur 3: eine separate Darstellung der Platine mit aufgebrachtem Leuchtmittel, Lichtleitkegel und Lichtleitelement.

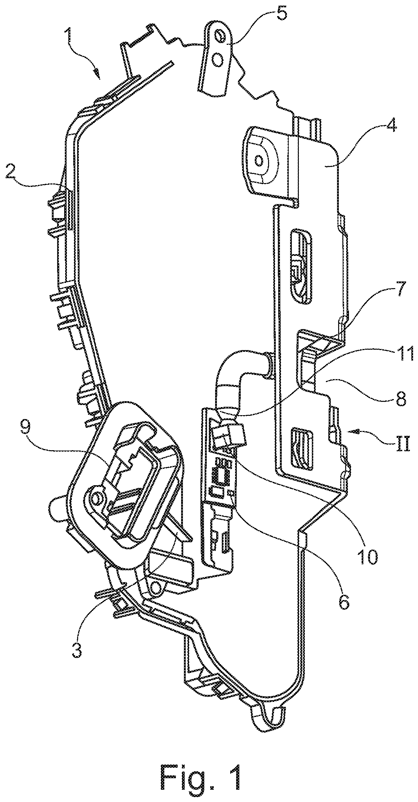

In der Figur 1 ist eine dreidimensionale Ansicht auf ein Kraftfahrzeugschloss 1 wiedergegeben. Dargestellt sind nur die zur Erläuterung der Funktion eines Ausführungsbeispiels notwendigen Bestandteile. Das Kraftfahrzeugschloss 1 umfasst ein Schlossgehäuse 2, einen Elektrokomponententräger 3, einen Schlosskasten, einen Betätigungshebel 5 und eine auf dem Elektrokomponententräger 3 angeordnete Platine 6. Der Schlosskasten 4 umschließt das Schlossgehäuse 2 zumindest bereichsweise und weist eine Öffnung 7 auf, die ein Einlaufmaul 8 für einen mit dem Kraftfahrzeugschloss 1 zusammenwirkenden nicht dargestellten Schlosshalter bildet.

Am Elektrokomponententräger 3 ist ein Stecker bzw. eine Steckdose 9 ausgebildet, über die das Kraftfahrzeugschloss 1 mit einem Steuergerät und/oder einer Stromversorgung des Kraftfahrzeugschlosses verbindbar ist. Die Platine 6 ist unmittelbar auf dem Elektrokomponententräger 3 angeordnet und elektrisch kontaktiert. Auf der Platine 6 ist ein Leuchtmittel 10 in Form einer LED elektrisch kontaktiert und befestigt. An das Leuchtmittel 10 ist ein Lichtleiter 11 angeschlossen, der sich in das Schlossgehäuse 2 hinein und in Richtung des Einlaufmauls 9 des Kraftfahrzeugschlosses 1 erstreckt.

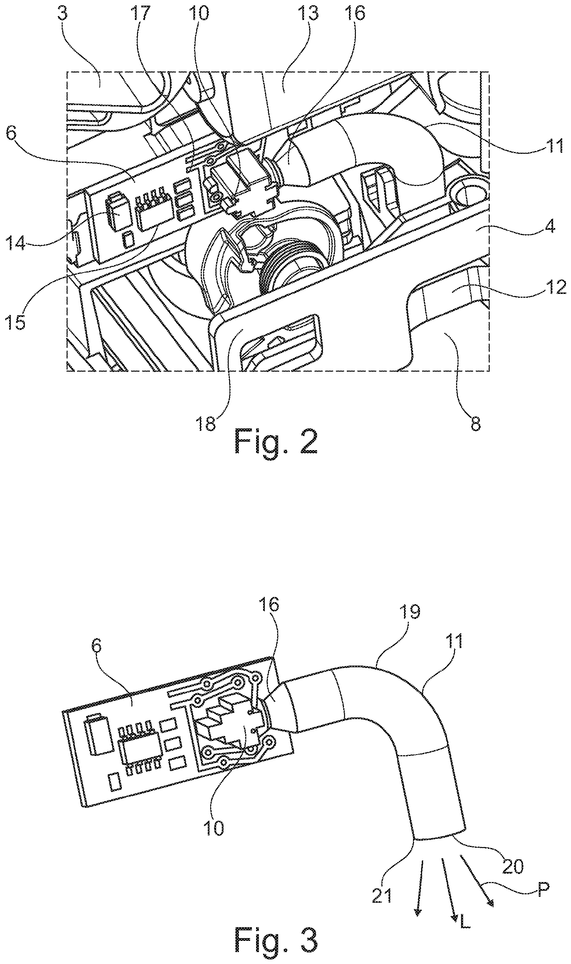

In der Figur 2 ist eine Detailansicht aus Richtung des Pfeils II aus der Figur 1 wiedergegeben. Gleiche Bauteile sind mit gleichen Bezugszeichen versehen. Zu erkennen ist der Schlosskasten 4, das Einlaufmaul 8 sowie die sich im Einlaufmaul 8 befindliche Drehfalle 12. Ein Elektromotor 13 ist mit dem Elektrokomponententräger 3 unmittelbar verbunden bzw. elektrisch kontaktiert. Zu erkennen ist weiterhin die Platine 6 mit den auf der Platine 6 angeordneten elektronischen Bauteilen 14, 15. Mittels der elektronischen Bauteile 14, 15 ist das Leuchtmittel 10 steuerbar.

An das Leuchtmittel 10 ist unmittelbar ein Lichtleitkegel 16 angebunden, der in diesem Ausführungsbeispiel eine kegelförmige Form aufweist. Unmittelbar an den Lichtleitkegel 16 ist das Lichtleitelement 11 angeschlossen, das sich in Richtung des Einlaufmauls 8 des Kraftfahrzeugschlosses 1 erstreckt. Das Leuchtmittel 10 ist über auf der Platine 6 angeordnete Leiterbahnen 17 mit der Platine 6 kontaktiert bzw. elektrisch verbunden. Die Platine 6 wiederum ist elektrisch mit dem Elektrokomponententräger 3 kontaktiert und wird unmittelbar über den Elektrokomponententräger 3 mit Spannung versorgt.

In diesem Ausführungsbeispiel ist die Platine 6 im Wesentlichen parallel zur Erstreckung 18 des Schlosskastens 4 angeordnet. Die Erstreckung 18 bildet den Teil des Schlosskastens 4, der sich zumindest bereichsweise um das Einlaufmaul 8 herum erstreckt.

In der Figur 3 ist die Platine 6, das Leuchtmittel 10 sowie der Lichtleiter 11 losgelöst vom Kraftfahrzeugschloss 1 wiedergegeben. Das Lichtleitelement 11 weist einen Winkel 19 auf, der nahezu 90° aufweist. Am Ende 20 des Lichtleiters 11 tritt Licht L aus einer Lichtaustrittsöffnung 21 aus. Wie zu erkennen, kann das Licht L je nach Ausbildung der Lichtaustrittsöffnung fokussiert oder gestreut aus dem Lichtleiter 11 austreten, was mit den Pfeilen P verdeutlicht wird.

Erfindungsgemäß wird durch ein Schaltelement, das beispielsweise die Position der Drehfalle 12 abfragt, ein Signal erzeugt, dass die Tür geöffnet wird, dann kann das im Kraftfahrzeug befindliche Steuergerät und/oder die elektronischen Bauteile 14, 15 im Kraftfahrzeugtürschloss 1 ein Signal generieren, das das Leuchtmittel 10 mit Spannung versorgt. Die elektronischen Bauteile 14, 15 steuern und/oder regeln dabei die Spannungsversorgung für das Leuchtmittel, so dass das Leuchtmittel 10 mit einer kontinuierlichen, einstellbaren Steuerspannung versorgt. Das durch das Leuchtmittel 10 erzeugte Licht L gelangt über den Lichtleitkegel 16 in das Lichtleitelement 11 und wird durch das Lichtleitelement umgelenkt und kann aus der Lichtaustrittsöffnung 21 austreten. Durch die Anordnung des Leuchtmittels auf der Platine kann dem Leuchtmittel 10 eine gleichbleibende Spannung zugeleitet werden, die für ein sicheres Ausleuchten einer Lichtaustrittsöffnung 21 im beispielsweise Einlaufmaul 8 dient.

### Bezugszeichenliste

- 1: Kraftfahrzeugschloss
- 2: Schlossgehäuse
- 3: Komponententräger
- 4: Schlosskasten
- 5: Betätigungshebel
- 6: Platine
- 7: Öffnung
- 8: Einlaufmaul
- 9: Stecker
- 10: Leuchtmittel
- 11: Lichtleiter
- 12: Drehfalle
- 13: Elektromotor
- 14, 15: elektronische Bauteile
- 16: Lichtleitkegel
- 17: Leiterbahnen
- 18: Erstreckung
- 19: Winkel
- 20: Ende des Lichtleiters
- 21: Lichtaustrittsöffnung

- L: Licht
- P: Pfeil

## Patentansprüche

1. Kraftfahrzeugschloss (1) aufweisend ein Schlossgehäuse (2), eine elektrische Stromversorgung, mindestens ein Leuchtmittel (10), wobei das Leuchtmittel (10) an die elektrische Stromversorgung anbindbar ist, und wobei das Leuchtmittel (10) Licht (L) in ein Lichtleitelement (11) emittiert, wobei das Leuchtmittel (10) unmittelbar auf eine im Inneren des Schlossgehäuses (2) angeordneten Platine anordbar ist, wobei das Lichtleitelement (11) mit einem dem Leuchtmittel (10) entgegengesetzten Ende (20) in einem Bereich endet, der es ermöglicht, dass Licht (L) im eingebauten Zustand des Kraftfahrzeugschlosses (1) in ein Umfeld des Kraftfahrzeugs emittierbar ist, wobei die Platine (6) Mittel zur Steuerung, insbesondere eine Steuerelektronik (14, 15), für das Leuchtmittel (10) aufweist, **dadurch gekennzeichnet, dass** durch ein Schaltelement, das beispielsweise die Position einer Drehfalle abfragt, ein Signal erzeugbar ist, wenn eine Tür geöffnet wird, sodass die elektronischen Bauteile (14, 15) im Kraftfahrzeugtürschloss (1) ein Signal generieren, das das Leuchtmittel (10) mit Spannung versorgt.

2. Kraftfahrzeugschloss nach Anspruch 1, **dadurch gekennzeichnet, dass** die Platine (6) auf einem Elektrokomponententräger (3) des Kraftfahrzeugschlosses (1) anordbar ist.

3. Kraftfahrzeugschloss nach einem der Ansprüche 1 oder 2, **dadurch gekennzeichnet, dass** das Lichtleitelement (11) unmittelbar mit dem Leuchtmittel (10) verbunden ist.

4. Kraftfahrzeugschloss (1) nach einem der Ansprüche 1 bis 3, **dadurch gekennzeichnet, dass** ein Lichtleitkegel (16) zwischen dem Lichtleitelement (11) und dem Leuchtmittel (10) angeordnet ist.

5. Kraftfahrzeugschloss (1) nach einem der Ansprüche 1 bis 4, **dadurch gekennzeichnet, dass** das Lichtleitelement (11) aus einem Kunststoff, insbesondere einem Polycarbonat oder einem Polymethylmethacrylat, gebildet ist.

6. Kraftfahrzeugschloss (1) nach einem der Ansprüche 1 bis 5, **dadurch gekennzeichnet, dass** das Lichtleitelement (11) im Einlaufmaul (8) des Kraftfahrzeugschlosses (1) endet.

7. Kraftfahrzeugschloss (1) nach einem der Ansprüche 1 bis 6, **dadurch gekennzeichnet, dass** die Platine (6) im Wesentlichen parallel zu einer Oberfläche, insbesondere einer Erstreckung (18), einer das Schlossgehäuse (2) zumindest bereichsweise umschließenden Schlossplatte (4) angeordnet ist.

8. Kraftfahrzeugschloss (1) nach einem der Ansprüche 1 bis 7, **dadurch gekennzeichnet, dass** das Lichtleitelement (11) eine opake und/oder lichtreflektierende Ummantelung aufweist.

9. Kraftfahrzeugschloss (1) nach einem der Ansprüche 1 bis 8, **dadurch gekennzeichnet, dass** das Lichtleitelement (11) im Schlossgehäuse (2) geführt und/oder fixiert ist.

## Claims

1. Motor vehicle latch (1) having a latch housing (2), an electrical power supply, and at least one lamp (10), it being possible to connect the lamp (10) to the electrical power supply, and the lamp (10) emitting light (L) into a light-conducting element (11), it being possible to arrange the lamp (10) directly on a circuit board arranged inside the latch housing (2), the light-conducting element (11) ending with an end (20) opposite the lamp (10) in a region that allows light (L) to be emitted into the surroundings of the motor vehicle when the motor vehicle latch (1) is installed, the circuit board (6) having means for control, in particular control electronics (14, 15), for the lamp (10), **characterized in that** when a door is opened, a signal can be generated by a switching element that queries, for example, the position of a catch, so that the electronic components (14, 15) in the motor vehicle door latch (1) generate a signal that supplies the lamp (10) with voltage.

2. Motor vehicle latch according to claim 1, **characterized in that** the circuit board (6) can be arranged on an electrical component carrier (3) of the motor vehicle latch (1).

3. Motor vehicle latch according to either claim 1 or claim 2, **characterized in that** the light-conducting element (11) is connected directly to the lamp (10).

4. Motor vehicle latch (1) according to any of claims 1 to 3, **characterized in that** a light-conducting cone (16) is arranged between the light-conducting element (11) and the lamp (10).

5. Motor vehicle latch (1) according to any of claims 1 to 4, **characterized in that** the light-conducting element (11) is made of a plastics material, in particular a polycarbonate or a polymethyl methacrylate.

6. Motor vehicle latch (1) according to any of claims 1 to 5, **characterized in that** the light-conducting element (11) ends in the inlet mouth (8) of the motor vehicle latch (1).

7. Motor vehicle latch (1) according to any of claims 1 to 6, **characterized in that** the circuit board (6) is arranged substantially in parallel with a surface, in particular an extension (18), of a latch plate (4) which encloses the latch housing (2) at least in regions.

8. Motor vehicle latch (1) according to any of claims 1 to 7, **characterized in that** the light-conducting element (11) has an opaque and/or light-reflecting casing.

9. Motor vehicle latch (1) according to any of claims 1 to 8, **characterized in that** the light-conducting element (11) is guided and/or fixed in the latch housing (2).

## Revendications

1. Serrure de véhicule automobile (1) présentant un boîtier de serrure (2), une alimentation électrique, au moins un moyen d'éclairage (10), le moyen d'éclairage (10) pouvant être connecté à l'alimentation électrique, et le moyen d'éclairage (10) émettant de la lumière (L) dans un élément conducteur de lumière (11), le moyen d'éclairage (10) pouvant être disposé directement sur une carte de circuit imprimé disposée à l'intérieur du boîtier de serrure (2), l'élément conducteur de lumière (11) se terminant par une extrémité (20) opposée au moyen d'éclairage (10) dans une région qui permet d'émettre de la lumière (L) dans une zone entourant le véhicule automobile lorsque la serrure de véhicule automobile (1) est à l'état installé, la carte de circuit imprimé (6) présentant des moyens de commande, en particulier une électronique de commande (14, 15), destinée au moyen d'éclairage (10), **caractérisée en ce qu'**un signal peut être généré par un élément de commutation qui interroge par exemple la position d'un loquet rotatif lorsqu'une porte est ouverte, de sorte que les pièces électroniques (14, 15) dans la serrure de portière de véhicule automobile (1) génèrent un signal qui alimente le moyen d'éclairage (10) en tension.

2. Serrure de véhicule automobile selon la revendication 1, **caractérisée en ce que** la carte de circuit imprimé (6) peut être disposée sur un support de composants électriques (3) de la serrure de véhicule automobile (1).

3. Serrure de véhicule automobile selon l'une des revendications 1 ou 2, **caractérisée en ce que** l'élément conducteur de lumière (11) est relié directement au moyen d'éclairage (10).

4. Serrure de véhicule automobile (1) selon l'une des revendications 1 à 3, **caractérisée en ce qu'**un cône conducteur de lumière (16) est disposé entre l'élément conducteur de lumière (11) et le moyen d'éclairage (10).

5. Serrure de véhicule automobile (1) selon l'une des revendications 1 à 4, **caractérisée en ce que** l'élément conducteur de lumière (11) est formé d'une matière plastique, en particulier d'un polycarbonate ou d'un polyméthacrylate de méthyle.

6. Serrure de véhicule automobile (1) selon l'une des revendications 1 à 5, **caractérisée en ce que** l'élément conducteur de lumière (11) se termine dans la bouche d'entrée (8) de la serrure de véhicule automobile (1).

7. Serrure de véhicule automobile (1) selon l'une des revendications 1 à 6, **caractérisée en ce que** la carte de circuit imprimé (6) est disposée sensiblement parallèlement à une surface, en particulier à un prolongement (18), d'une plaque de serrure (4) entourant au moins par régions le boîtier de serrure (2).

8. Serrure de véhicule automobile (1) selon l'une des revendications 1 à 7, **caractérisée en ce que** l'élément conducteur de lumière (11) présente un revêtement opaque et/ou réfléchissant la lumière.

9. Serrure de véhicule automobile (1) selon l'une des revendications 1 à 8, **caractérisée en ce que** l'élément conducteur de lumière (11) est guidé et/ou fixé dans le boîtier de serrure (2).
